Europäisches Patentamt

**European Patent Office**

**Office européen des brevets**

(19)

(11) Publication number: **0 102 678**
A2

# (12) EUROPEAN PATENT APPLICATION

(21) Application number: **83302447.4**

(22) Date of filing: **29.04.83**

(51) Int. Cl.³: **G 01 F 23/24**
**G 01 F 23/04**

(30) Priority: **17.05.82 US 379040**

(43) Date of publication of application:
**14.03.84 Bulletin 84/11**

(84) Designated Contracting States:
**DE FR GB IT**

(71) Applicant: **MINNESOTA MINING AND
MANUFACTURING COMPANY
3M Center, P.O. Box 33427
St. Paul, MN 55133(US)**

(72) Inventor: **Dressler, Daryl D.
Minnesota Mining and Manf. Cy. 2501 Hudson Road
P.O. Box 33427 St. Paul Minnesota 55133(US)**

(72) Inventor: **Fiala, Jimmy L.
Minnesota Mining and Manf. Cy. 2501 Hudson Road
P.O. Box 33427 St. Paul Minnesota 55133(US)**

(72) Inventor: **LaChapelle, William C.
Minnesota Mining and Manf. Cy. 2501 Hudson Road
P.O. Box 33427 St. Paul Minnesota 55133(US)**

(74) Representative: **Baillie, Iain Cameron et al,
c/o Ladas & Parry Isartorplatz 5
D-8000 München 2(DE)**

(54) **Liquid level sensing probe.**

(57) A sensing probe including a wound, flexible, resilient, metal 10 tube in which an insulated wire 24 extends and is secured at one end to the outer end portion of an insulative member 12 sealingly positioned within the tube and extending from the tube. The sensing probe is particularly useful to adapt an internal combustion engine so the crankcase oil level can be sensed electronically via electronic circuitry connected to the insulated wire of the probe.

FIG. 2

EP 0 102 678 A2

## DESCRIPTION
### Liquid Level Sensing Probe

Technical Field

The invention presented herein relates to sensing probes for electrically sensing liquid level and, in particular, to sensing probes suitable for use with internal combustion engines for sensing crankcase oil level.

Background Art

Circuitry is presently available which operates to indicate a suitable crankcase oil level in an engine in response to a probe making electrical contact with the crankcase oil and provides a different indication when the probe does not make contact with the engine crankcase oil. Since the probe is inserted in the normal oil dipstick tube of the engine, it is necessary that the portion of the probe used to make electrical contact with the oil level be electrically isolated from the dipstick tube or any other metal part of the engine. There are circuitry specifications requiring that the insulation resistance to ground be maintained higher than $10^{11}$ ohms at temperatures up to 150 degrees centigrade. One prior design for a probe involved the use of either a flat steel strip or a round wire to which a dipstick tube closure member of insulative material is attached. A connector, which makes electrical contact with the flat metal strip or round wire, is mounted at the dipstick tube closure member. Except for the tip portion used to make electrical contact with the oil, the flat stick strip or round wire is coated with a commercially available powdered epoxy.

A number of problems have been encountered with probes of such a design in view of the rather hostile environment to which the probe is subjected. This includes high and widely varying temperatures plus oil dipstick tubes that present an interior that is gritty, grimy, abrasive and may contain fairly sharp burrs which tend to harm any insulative coating or covering on the outer surface of the probe. It is extremely difficult to provide a uniformly thick epoxy coating over the entire strip of flat metal particularly at the sharp edges the strip presents. The sharp edges receive the most wear leading to exposure of the metal causing the probe to short to ground when positioned in the engine causing the circuitry to provide an erroneous indication. While a round wire probe is easier to uniformly coat with epoxy, a wire selected for the needed resistance to whipping and flexing is difficult to insert in many engines and takes a set when forced through curved dipstick tubes. Some dipstick tubes may have more than one right angle bend with a radius of curvature as small as 7.6 to 10 centimeters. Like the flat metal strip design, the round wire structure is subject to a wearing away of the epoxy coating.

Disclosure of the Invention

All of the deficiencies of the prior sensing probe designs are overcome by a sensing probe according to the present invention which includes a wound, flexible, resilient tube of metal or a plastic material, an insulative member which has one portion disposed within the tube and a second portion that extends from one end of the tube with an insulated wire provided that runs the length of the tube and the insulative member. The wire extends slightly beyond the insulative member with means provided at the insulative member to secure the wire in position and seal the area between the wire and the insulative member. The wire and the means securing the wire in position at the insulative member provide a conductive path, one end of which can make contact with a liquid, with the other end available for connection to the circuitry used with the probe.

This arrangement provides a sensing probe having the flexibility needed to allow it to pass easily through the bends encountered in some oil dipstick tubes and yet has a high degree of longitudinal rigidity which prevents whipping and flexing when the probe extends some unsupported distance from the end of a dipstick tube.

The wound tube can be readily shortened by a user to meet the length requirements for an engine with which it is to be used. In addition, it can be readily coiled for packaging to prepare it for sale to customers without taking on a set, thus, eliminating any probelm to the user with respect to straightening the probe, as is the case with some prior designs.

The wire carried within the tube provides the needed conductive path from the liquid level to the circuitry to which it makes connection. The tube need not be isolated from ground since the wire can be purchased with insulation suitable for the environment to which it is subjected. The tube serves to protect the insulation on the wire from any damage.

## Brief Description of the Drawings

A better understanding of this invention including its novel features and advantages will be obtained upon the consideration of the following detailed description and the accompanying drawings wherein:

Figure 1 shows a sensing probe embodying the invention; and

Figure 2 is a cross-section view of a part of the sensing probe of Figure 1.

## Detailed Description

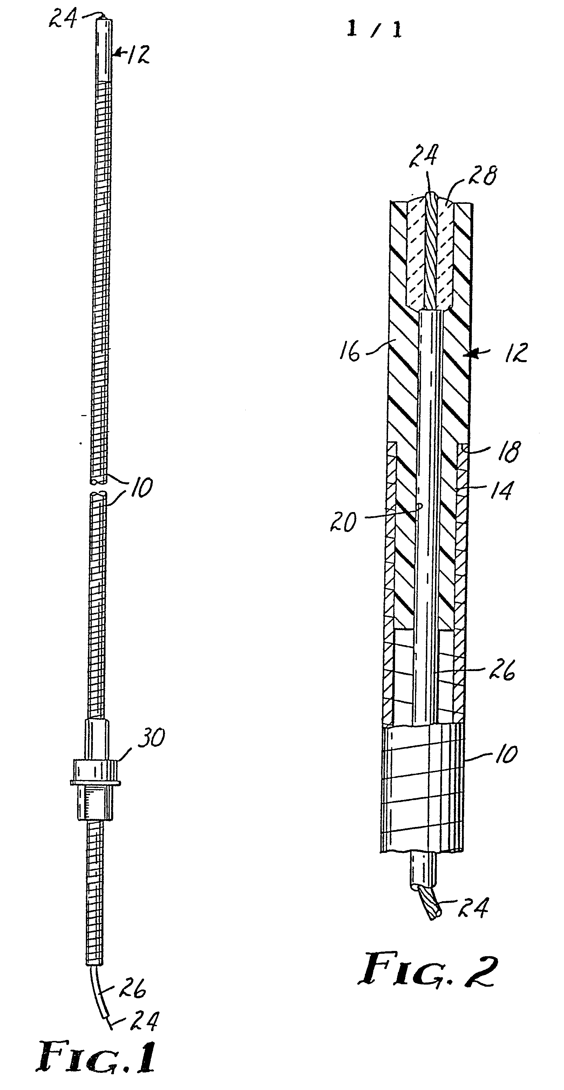

Referring to Figure 1 of the drawings, a sensing probe embodying the present invention is shown. A portion of the probe structure of Figure 1 is shown in cross-section in Figure 2. Mechanical rigidity for the probe is provided by a tubular member 10, which is a wound, flexible, resilient tube. While metal or a plastic material may be used for forming the tubular member 10, wound metal tubes such as are commonly used for cable controls of the push-pull type for automobiles and gasoline engine driven lawn mowers represent the preferred structure for the member 10. The tube, when formed from metal, is constructed of either round or flat steel wire that is somewhat resilient or spring-like which is spirally wound to form a conduit or tube. The flat steel wire is rectangular in cross-section. It is preferred that the tube member 10 be formed from flat rather than round wire, since it provides a larger inner diameter for a given outside diameter and also presents a smoother outer surface from which liquids can drain off rapidly. An elongate, insulative member 12 having a central bore or opening 20 that extends the length of the member 12 is provided. The material used to form the member 12 should present a resistance of at least $10^{11}$ ohms at temperatures up to 150 degrees centigrade. Polytetrafluoroethylene is a suitable material for the member 12. In addition to its high resistance, such material has a low affinity for oil which is desirable. The member 12 has a first portion 14 that is received within one end portion of the tubular member 10 and is sized relative to the central opening 20 of the tubular member 10 to provide a press fit between the inner surface of the tube 10 and the member 12 to hold it in place. The remaining portion 16 of member 12 is larger in diameter than the portion 14, so that a shoulder 18 is provided that abuts the end of the tubular member 10. The central opening 20 at the outer end portion of portion 16 is enlarged.

The probe includes a wire 24, which can be solid or stranded. The wire is provided with an outer insulative covering 26, which can be polytetrafluoroethylene to provide a resistance of at least $10^{11}$ ohms at temperatures up to 150 degrees centigrade. The wire 24 is positioned within the tubular member 10 and extends from a point just beyond the outer end of the insulative member 12 to the other end of the tubular member 10 continuing for a distance suitable for making connection to circuitry to be used with the sensing probe. The insulation 26 is removed for the portion of the wire 24 that is within the enlarged portion of the opening 20 at the outer end portion 16 of the insulative member 12. This enlarged portion of the opening 20 is filled with solder 28 or other conductive material which serves to seal the opening 20 at the outer end portion of the insulative member 12 and secures the wire 24 in place in the insulative member 12. Positioning the uninsulated end portion of wire 24 within the end portion 16 of member 12 in a sealing and secure manner can be accomplished in other ways. For example, a metallic, cylindrical member can be secured about the uninsulated end portion of wire 24 in a sealing manner, such as by solder or mechanical crimping with the combination then inserted by a press fit into the end portion 16 of member 12. While the wire 24 is shown in Figure 1 as extending slightly - beyond the main body of solder 28, it can be flush with the solder 28 or can be covered by the solder 28. The smaller diameter portion of the opening 20 in the insulative member 12 is related to the outer diameter of the insulation 26 for wire 24 so that a liquid sealing fit is obtained between the outer surface of the insulation 26 and the insulative member 12. Should liquid, for any reason, get inside the tubular member 10, this liquid sealing fit prevents the liquid from reaching the solder 28 or any exposed portion of the wire 24 within the opening 20. If that were allowed to occur, an electrical path might be present via the liquid from the tubular member 10 to the wire 24 causing the probe to act as though it were in contact with the liquid it is to sense. This, of course, would not be an acceptable condition. A condition where an oil film or collection of oil on the outside of the tubular member bridges the outside of the insulative member 12 from the tubular member 10 to the wire 24 or solder 28 at the end of the member 12 does not present a problem. It has been found that warm oil, even thick, used oil, will drain off sufficiently in 15 to 20 seconds, so that the electrical conductivity it presents is too low to affect the proper operation of circuitry used with the probe. As indicated earlier, a tubular member 10 formed from flat steel wire provides for good drainage of oil from the outer surface of member 10.

While the sensing probe of Figure 1 also is shown with a bushing 30 positioned along the tubular member 10, the portion of the sensing probe described without the bushing 30 provides a structure that is usable with most, if not all, existing internal combustion engines in that it can be readily cut by the user to the length needed to adapt an engine for electronic sensing of the crankcase oil level. The bushing 30 serves to center the sensing probe in the dipstick tube of the engine, close off the dipstick tube, and determines the extent to which the probe extends into the engine to contact the crankcase oil when it is at a proper level. The bushing also provides a resistance to withdrawal of the probe. The bushing can take on various forms consistent with such functions. The bushing can be made from various materials or combinations of materials such as plastic, rubber, high density foam and metal. It is contemplated that the bushing 30 needed for a particular engine to be adapted for electronic oil level sensing will be provided and will be properly positioned along the tubular member and secured in place, such as by a set screw (not shown) by the user to complete the structure per Figure 1. While not shown, a metal or plastic handle can be provided as an integral part of the bushing 30 or can be attached to the bushing to simplify insertion and withdrawal of the probe relative to an oil dipstick tube.

Completion of the structure of Figure 1, to include the bushing 30, proceeds as follows where an existing engine is to be adapted for electronic sensing of crankcase oil level: The user would remove the oil dipstick from the engine and place the sensing probe of Figure 1 so the wire 24 at the end of the insulative member 12 is opposite the "add oil" mark on the oil dipstick removed from the engine. Tne bushing 30 that is provided would then be positioned along the tubular member 10 by the user according to the position of the bushing that is provided on the dipstick removed from the engine. The bushing 30 would then be fixed at that position, such as by a set screw (not shown) by the user. The portion of the tubular member 10 that extends beyond the bushing 30 can be easily shortened, if desired, by bending the member 10 sharply 180 degrees at the point it is to be cut. This establishes an opening in the wall of the tubular member 10. The user must then withdraw the wire 24 from the portion of the tube to be removed via the opening established in the wall of the tubular member 10. The user then cuts the tubular member 10 at the point where it was bent. The wire 24 can then be connected to the electronic circuitry to be used with the sensing probe and the sensing probe can then be inserted into the oil dipstick tube of the engine with the wire 24 available for making connection with the electronic circuitry to be used with the probe.

While a press fit between the internal surface of the tubular member 10 and the insulative member 12 is obtained, such fit is improved through the temperature cycling that the sensing probe is subjected to in use which will cause the insulative material used for member 12 to cold flow to conform to the convoluted inner surface of the tubular member 10. In addition, the press fit between the member 10 and the member 12 serves to create a clamping action between the insulation 26 of wire 24 and the member 12. The tubular member 10 is an important aspect of the structure in that it can be forced through a radius of curvature as small as 5 centimeters without taking on a set and come out as straight as it entered the curvature. It is also highly resistant to flexing and whipping when it extends as much as 20 centimeters from the end of the oil dipstick tube. In addition to the advantages already mentioned that are provided by the use of flat wire for making the tubular membr 10, the flat wire with its rectangular cross-section provides greater stiffness for a given outside diameter for the member 10.

The particulars of the foregoing description are provided merely for purposes of illustration and are subject to a considerable latitude of modification without departing from the novel teachings disclosed therein. Accordingly, the scope of this invention is intended to be limited only as defined in the appended claims, which should be accorded a breadth of interpretation consistent with this specification.

-1-

CLAIMS

1. A probe for electronically sensing liquid level including a flexible, resilent tube 10 in which a wire 24 is received that extends the length of the tube characterized in that:

the flexible, resilient tube 10 is a wound tube having an insulative member 12 having one portion 14 disposed within and a second portion 16 extending from one end of the tube, said insulative member having an opening extending the length of said insulative member and coaxially to the tube; the wire 24 having insulation and extending through said opening in said insulative member, the wire having an uninsulated end portion within said second portion of said insulative member and extending beyond the end of said second portion; and material 28 secured to said uninsulated end portion of said wire and sealing said opening in said insulative member at said uninsulated end portion of the wire.

2. A probe for electronically sensing liquid level according to claim 1 characterized in that said material 28 secured to said uninsulated end portion of the wire 24 is electrically conductive.

3. A probe for electronically sensing liquid level according to claim 1 characterized in that the probe includes a positioning member 30 fixedly positioned at the outside surface of said tube near said other end of said tube.

4. A probe for electronically sensing liquid level according to claim 1 characterized in that said insulative member 12 presents a resistance in excess of $10^{11}$ ohms at temperatures up to 150° centigrade.

5.   A probe for electronically sensing liquid level according to claim 1 characterized in that the wound, flexible metal tube 10 is capable of being curved at a radius of about 7.6 centimeters without taking a set.

6.   A probe for electronically sensing liquid level according to claim 1 characterized in that said insulative member 12 is formed from a material having a low affinity for oil.

7.   A probe for electronically sensing liquid level according to claim 1 characterized in that said opening in said insulative member 12 is smaller in diameter in said one portion 14 than said second portion 16 of said insulative member.

8.   A probe for electronically sensing liquid level according to claim 1 characterized in that said opening in said insulative member 12 in said one portion 14 is of a diameter such that the insulated wire makes close, liquid sealing contact with said insulative member at said one portion.

9.   A probe for electronically sensing liquid level according to claim 1 characterized in that the tube 10 is a metal tube.

FIG.1

FIG. 2